Europäisches Patentamt

European Patent Office

Office européen des brevets

(11) Veröffentlichungsnummer: **0 337 283**
**A2**

(12) **EUROPÄISCHE PATENTANMELDUNG**

(21) Anmeldenummer: **89106010.5**

(51) Int. Cl.⁴: **G06K 7/10**

(22) Anmeldetag: **06.04.89**

(30) Priorität: **13.04.88 DE 3812215**

(43) Veröffentlichungstag der Anmeldung:
**18.10.89 Patentblatt 89/42**

(84) Benannte Vertragsstaaten:
**AT DE FR GB IT**

(71) Anmelder: **TELEFUNKEN electronic GmbH
Theresienstrasse 2
D-7100 Heilbronn(DE)**

(72) Erfinder: **Englmeier, Martin, Dipl.-Ing.
Schubertstrasse 25
D-8071 Lenting(DE)**

(74) Vertreter: **Maute, Hans-Jürgen, Dipl.-Ing.
TELEFUNKEN electronic GmbH
Theresienstrasse 2
D-7100 Heilbronn(DE)**

(54) **Warenauszeichnungseinrichtung.**

(57) Eine Warenauszeichnungseinrichtung weist eine Ausgabeeinrichtung 5 auf, die Angaben über die zu kennzeichnende Ware 19 enthält. Um die Angaben nicht handschriftlich auf die Ausgabevorrichtung schreiben zu müssen, ist das Ausgabegerät 5 mit einem Datenspeicher 14 versehen, wobei über eine Auswerteschaltung 11, eine Text-und/oder Tonausgabevorrichtung oder eine Warneinrichtung aktivierbar sind. Das Ausgabegerät 5 kann dabei über eine Sicherungseinrichtung 18 zugleich zur Diebstahlsicherung herangezogen werden. Die Eingabe aktueller Daten in das Ausgabegerät 5 erfolgt vorzugsweise über einen zentralen Sender 1, der ein die aktuellen Daten enthaltendes Datensignal drahtlos oder drahtgebunden an das Ausgabegerät 5 sendet. Über den Sender 1 ist somit eine stete Aktuallisierung der auszugebenden Daten am Ausgabegerät 5 möglich. Über die Tonausgabevorrichtung kann dabei der Dateninhalt auch Sprachsignale umgewandelt werden, die über eine separate Abruftaste 23 z. B. von Sehbehinderten abrufbar ist.

FIG.

## Warenauszeichnungseinrichtung

Die Erfindung betrifft eine Warenauszeichnungseinrichtung gemäß dem Oberbegriff des 1. Anspruchs.

Zur Auszeichnung von Waren wird ganz allgemein ein Anzeigefeld verwendet, das entweder unmittelbar auf der Ware oder auf einem der Ware zugeordneten Träger vorgesehen ist. Das Anzeigefeld kann dabei Angaben über den Preis, die Artikelnummer, den Namen des Artikels, den Hersteller, ein Warenzeichen, Angaben über den Lagerort, sonstige Eigenschaften der Ware usw. enthalten. Derartige Anzeigefelder werden manuell beschriftet und erfordern insbesondere auch zur Aktuallisierung einen beachtlichen Arbeits- und Personalaufwand.

Der Erfindung liegt die Aufgabe zugrunde, eine Warenauszeichnungseinrichtung gemäß dem Oberbegriff des 1. Anspruchs zu schaffen, die eine zentrale Auszeichnung von Waren an entfernten Orten ermöglicht.

Die Lösung dieser Aufgabe erfolgt gemäß der Erfindung durch die kennzeichnenden Merkmale des 1. Anspruchs.

Bei einem Aufbau einer Warenauszeichnungseinrichtung gemäß der Erfindung können über einen zentralen Sender alle in seinem Wirkungsbereich liegenden Ausgabegeräte gezielt angesprochen und über den eingebauten Empfänger der Aussageinhalt auf einem beispielsweise in LCD-Technik aufgebauten Schriftanzeigefeld sichtbar gemacht oder geändert werden. Der vom zentralen Sender übermittelte Aussageinhalt kann jedoch auch in akkustische Signale und insbesondere in Sprachsignale umgesetzt und über eine Sprachausgabeeinrichtung am Ausgabegerät ausgegeben werden. Auch können Leuchtanzeigen den Aussageinhalt wiedergeben. Vorzugsweise wird dabei die Sprachausgabe durch eine manuell betätigbare Auslösevorrichtung in Gang gesetzt, um unnötige Lärmbelästigung zu vermeiden. Auch kann zur Stromersparnis das Anzeigefeld oder auch die optische Leuchtanzeige nur nach manuellem Aufruf aktivierbar sein. Das Ausgabegerät kann dabei auch einen Datenspeicher umfassen, der neben der jeweiligen Artikelnummer auch Angaben über den Preis, den Hersteller, usw. codiert aufnehmen kann, wobei im Ausgabegerät eine Auswerteschaltung vorgesehen ist, die die vom Sender empfangenen codierten Signale in Codeworte umsetzen, welche in den Datenspeicher eingelesen werden können und für weitere Aufgaben daraus auch wieder ausgelesen werden können. Die sicht- oder hörbar zumachenden Informationen stehen so jederzeit zur Verfügung und können dauernd oder über eine manuell betätigbare Abruftaste bei Bedarf ausgegeben werden. Die gespeicherten Daten können jedoch auch über einen Bestätigungssender zurück zu einem dem Zentralsender zugeordneten Rückmeldeempfänger gesendet werden, so daß zentral eine Überwachung möglich ist, ob am Anzeigegerät die tatsächlich vorgegebenen Daten ausgegeben werden bzw. gespeichert sind.

Beim Eingang von neuen Waren wird dabei so verfahren, daß in den Datenspeicher des Ausgabegerätes die einem Gegenstand zugeordnete Artikelnummer eingegeben wird. Gleichzeitig können auch die Angaben über den Preis, den Hersteller, graphische Zeichen, den Lagerort usw. in den Datenspeicher eingespeichert werden. Sie stehen damit sofort zur Verfügung. Sollen diese Angaben z. B. für eine Sonderverkaufsaktion geändert werden, dann können die einzelnen Ausgabegeräte über die Artikelnummer vom zentralen Sender aus angesprochen werden und über die Auswerteschaltung des Empfängers der Inhalt des Datenspeichers und auch die Artikelnummer geändert werden. Das Ausgabegerät eignet sich gleichzeitig auch zur Sicherung von insbesondere höherwertigen Gütern, wie beispielsweise Pelzwaren oder dergleichen. Wird demnach das fest mit dem zusichernden Gegenstand verbundene Ausgabegerät von diesem Gegenstand gelöst, hochfrequenzmäßig abgeschattet oder in den Bereich einer Hochfrequenzschleuse beispielsweise an einem Ausgang eines Verkaufsraumes gebracht, dann kann gleichzeitig über eine akustische und gegebenenfalls eine Leuchtanzeige Alarm ausgelöst werden. Die Übertragung der codierten Signale zwischen dem zentralen Sender und dem jeweiligen Ausgabegerät kann drahtlos oder über induktive, kapazitive oder galvanische Koppelelemente an Schienen erfolgen, die einem die Waren tragenden Regal zugeordnet sind. Besonders vorteilhaft ist die Übertragung der Daten mittels Infrarot oder Ultraschall. Selbstverständlich können die Ausgabegeräte auch außerhalb des Sendebereichs des Senders angeordnet werden, wenn sie vorher im Bereich des Senders mit den Informationsdaten geladen worden sind. Es ist dann jedoch eine unmittelbare Aktualisierung der gespeicherten Daten nur dann möglich, wenn der Strahlungsbereich des Senders erhöht, der Sender in den Bereich des Ausgabegerätes oder das Ausgabegerät in den Bereich des Senders verbracht wird.

Andere vorteilhafte Ausgestaltungen der Erfindung sind in den weiteren Ansprüchen angegeben.

Die Erfindung ist nachfolgend an Hand der Prinzipskizze eines Ausführungsbeispiels näher erläutert.

Ein beispielsweise in einer Herstellungs-Lager-Vertriebs- oder Verkaufsstelle angeordneter zentraler Sender 1 gibt drahtlos oder drahtgebunden Signale aus, die codierte Informationen enthalten, welche einer Artikelnummer, einem Preis, einem Hersteller, einer Warenmarke, einem Artikelnamen, einem Lagerort und einem Bestimmungsort, besonderen Eigenschaften der Ware oder sonstigen Informationen entsprechen. Dem Sender kann auch ein später noch zu erläuternder Rückmeldeempfänger 2 und eine Vergleichsstufe 3 zugeordnet sein. Für die Funkübertragung von aktuellen Datensignalen 4 vom Sender 1 zu einem Ausgabegerät 5 dient eine Senderantenne 6 im Bereich des Senders 1. Außerdem ist für den Rückmeldeempfänger 2 eine Rückmeldeantenne 7 für Rückmeldedatensignale 8 vorgesehen, die von einem dem Ausgabegerät 5 zugeordneten Rückmeldesender 9 abgegeben werden. Das einer Ware, gegebenenfalls auch einer Person direkt oder mittelbar zugeordnete Ausgabegerät 5 ist mit einer Empfangsantenne 10 für die Aufnahme der aktuellen Datensignale 4 bei Funkübermittlung ausgerüstet. Die Empfangsantenne 10 kann jedoch auch durch induktive, kapazitive oder galvanische Koppelmittel ersetzt oder ergänzt werden, wenn das Ausgabegerät beispielsweise an eine Daten- und gegebenenfalls Versorgungsschiene angekoppelt wird, die beispielsweise einer Verkaufswand oder einem Verkaufsregal zugeordnet ist, welches die auszulobenden Waren aufnimmt. Über die Versorgungsschiene können auch die zur Stromversorgung des Ausgabegerätes 5 erforderlichen Ströme geschickt werden. Im Ausgabegerät 5 werden die aktuellen Datensignale 4 einer Auswerteschaltung 11 zugeführt, die einerseits ein insbesondere in LCD-Technik aufgebautes Schriftanzeigefeld 12 steuert und der ein entweder nicht flüchtiger oder dauernd aus einer Stromquelle 13, insbesondere einer wiederaufladbaren Batterie gespeister Datenspeicher 14 zugeschaltet ist. Die aktuellen Datensignale 4, insbesondere aber die codierte Artikelnummer wird im Datenspeicher 14 abgelegt. Vom Sender 1 aus kann somit über die Artikelnummer das jeweilige Ausgabegerät 5 angesprochen und die Information direkt im Anzeigefeld 12 sichtbar gemacht und der Datenspeicher 14 erstmalig mit weiteren aktuellen Daten gespeist bzw. bereits abgespeicherte Daten geändert werden. In entsprechender Weise verändert sich dabei auch die Anzeige im Anzeigefeld 12. Es ist somit möglich, die ausgegebenen Daten des Ausgabegerätes solange zentral zu verändern, wie die Datenverbindung zwischen Sender 1 und Ausgabegerät 5 gegeben ist. Zusätzlich oder alternativ zur Batterie 13 kann das Ausgabegerät 5 eine Solarzelle 15 aufnehmen, welche die elektrischen Elemente des Ausgabegeräts 5 mit Strom versorgt. Dabei kann zumindest bei Vorhandensein der Batterie 13 bei fehlendem Solarzellenstrom zur Stromersparnis das Anzeigefeld 12 und andere nicht erforderliche Verbraucher abgeschaltet sein. Ein Änderung der abgespeicherten Daten läßt sich so bei vorhandener Batterie 13 auch während der Nacht oder in dunklen unbenutzten Räumen vornehmen.

Neben oder anstatt des Anzeigefeldes kann das Ausgabegerät auch eine Tonausgabevorrichtung 16 und gegebenenfalls auch eine Leuchtanzeige 17 aufweisen. Über die Tonausgabevorrichtung 16 kann unter Benutzung eines elektronischen Sprachwandlers eine Sprachausgabe erfolgen, welche die im aktuellen Datensignal 4 enthaltenen Informationsinhalte wiedergibt. Die Tonausgabevorrichtung 16 kann jedoch auch in Verbindung mit einer Sicherungseinrichtung 18 zur Alarmgabe ausgenutzt werden, wenn die Sicherungseinrichtung 18 bzw. das Ausgabegerät 5 fest mit der auszulobenden und zu sichernden Waren 19 verbunden ist. Die Sicherungseinrichtung ist dabei so aufgebaut, daß sie über eine Sicherungsschleife 20 an der Ware 19 festgesetzt ist, wobei die Sicherungseinrichtung anspricht, wenn die Sicherungsschleife 20 getrennt, die Datenverbindung zwischen Sender 1 und Ausgabegerät 5 unterbrochen oder das Ausgabegerät 5 in den Bereich eines Sicherungssenders gelangt. Neben einem Alarmton über die Tonausgabevorrichtung kann dann auch die Leuchtanzeige 17 aktiviert werden, die auch dann von Nutzen ist, wenn eine bestimmte Ware 19 bzw. das zugeordnete Ausgabegerät 5 gesucht wird. Insbesondere über die Artikelnummer kann somit bei Übereinstimmung der im Datenspeicher 14 abgelegten Artikelnummer mit der im codierten Sendersignal 4 des Senders 1 enthaltenen Artikelnummer ein oder mehrere der weiteren Codewörter im Datenspeicher 14 abgelegt oder geändert werden. Diese Informationsinhalte können auch gleichzeitig an ein oder mehrere der Ausgabeelemente 12,16 oder 17 ausgegeben werden. Die Auswerteschaltung 11 steuert im Übrigen eine Sprachausgabeeinrichtung, die der Tonausgabevorrichtung 16 zugeordnet ist, wenn beispielsweise zur Information von Sehbehinderten eine Warenauslobung erforderlich ist.

Der dem Ausgabegerät 5 zugeordnete Rückmeldesender 9 wird von der Auswerteschaltung 11 gesteuert und erhält ein Rückmeldesignal, das einen dem aktuellen Dateneingabesignal entsprechenden Informationsinhalt aufweist. Die vom Rückmeldesender 9 ausgegebenen Rückmeldedaten werden über eine Rücksendeantenne 21 oder über eine andere Koppeleinrichtung der Rückmeldeempfangsantenne 7 zugeführt, die über den Rückmeldeempfänger 2 an die Vergleichsstufe 3 weitergeleitet werden. Dort erfolgt ein Vergleich der zuvor ausgegebenen aktuellen Datensignale 4 mit dem Rückmeldesignal, wobei bei Übereinstimmung der Datenübertragungsfluß abgeschlossen wird und im Fehlerfalle eine erneute Aussendung der aktuellen Datensignale 4 vorgenommen oder eine Alarm über die Tonausgabevorrichtung 16 bzw. die Leuchtanzeige 17 oder am Sender ausgegeben wird. Dadurch ist sichergestellt, daß fehlerhaft arbeitende Ausgabegeräte kenntlich gemacht werden. Auch kann bei einer weitgehenden Erschöpfung der Batterie 13 die Alarmeinrichtung über die Auswerteschaltung 11 ausgelöst werden.

Der Sender 1 wie der dem Ausgabegerät 5 zugeordnete Empfänger kann auf unterschiedliche Empfangsfrequenzen abstimmbar sein, so daß durch Wahl der Frequenzen Artikel in bestimmten Abteilungen oder bestimmter Warengattungen angesprochen werden können. Es können so auch beispielsweise ähnliche Waren mit gleichen Artikelnummern über unterschiedliche Frequenzen selektiert und deren Daten aktuallisiert werden.

Das Ausgabegerät kann auch mehreren Verkaufswänden oder mehreren Verkaufsregalen zugeordnet werden, um hierdurch für Massenartikel eine wirtschaftliche Preisauszeichnung zu realisieren.

Schließlich ist es auch von Vorteil, das Ausgabegerät einem bestimmten Sektor der Verkaufsfläche eines Warenhauses zuzuordnen, auf der eine oder mehrere Warengruppen ausgestellt und dem Kunden zugänglich gemacht sind.

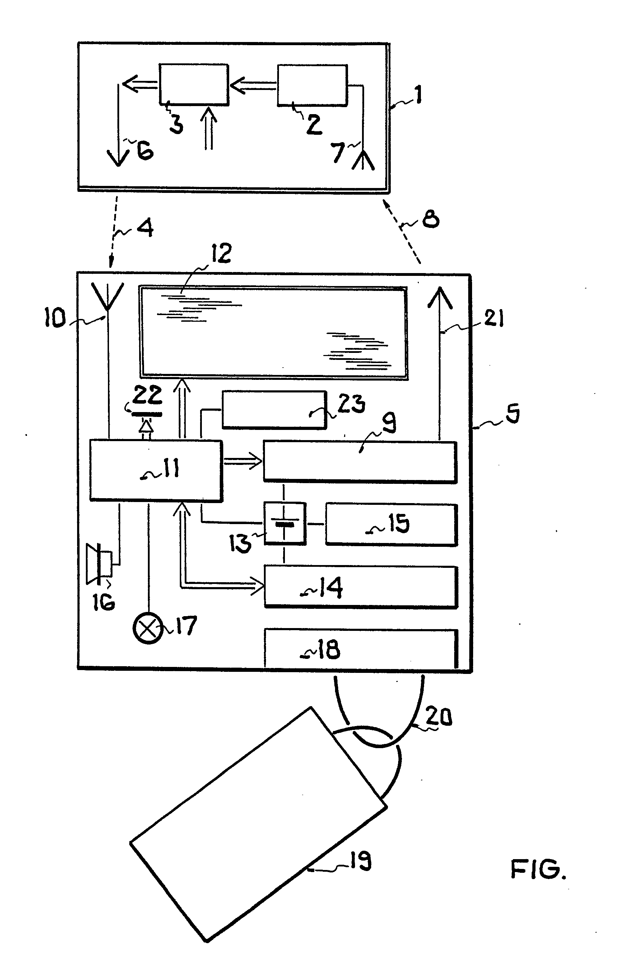

## Ansprüche

1. Warenauszeichnungseinrichtung, die eine der zu kennzeichnenden Ware zugeordnete Ausgabeeinrichtung aufweist, dadurch gekennzeichnet, daß ein zentraler Sender (1) ein warenspezifisch codiertes Signal (4) abgibt und daß der Ausgabeeinrichtung (5) ein Empfänger zugeordnet ist, der das codierte Signal (4) in sichtbare und/oder hörbare Signale umsetzt.

2. Warenauszeichnungseinrichtung nach Anspruch 1, dadurch gekennzeichnet, daß das codierte Sendersignal (4) Angaben entsprechend einer Artikelnummer und/oder dem Preis und/oder dem Hersteller und/oder einer Warenmarke und/oder dem Artikelnamen und/oder dem Lagerort einer Ware enthält.

3. Warenauszeichnungseinrichtung nach Anspruch 1 oder 2, dadurch gekennzeichnet, daß das Ausgabegerät (5) Ausgabeelemente wie ein Schriftanzeigefeld (12) und/oder eine Tonausgabevorrichtung (16) und/oder eine optische Leuchtanzeige (7) aufweist, die über eine Auswerteschaltung (11) des Empfängers gesteuert sind und daß der Auswerteschaltung (11) ein Datenspeicher (14) zugeschaltet ist.

4. Warenauszeichnungseinrichtung nach Anspruch 1 oder einem der folgenden, dadurch gekennzeichnet, daß der Datenspeicher (14) ein nichtflüchtiger Speicher oder stets an eine Stromquelle (13) angeschlossen ist und zumindest die Artikelnummer codiert enthält, und daß in der Auswerteschaltung (11) bei Obereinstimmung der im Datenspeicher (14) abgelegten Artikelnummer mit der im codierten Sendersignal (4) des Senders (1) enthaltenen Artikelnummer die weiteren codierten Daten umgesetzt und an ein oder mehrere der Ausgabeelemente (12,16,17) ausgegeben werden.

5. Warenauszeichnungseinrichtung nach Anspruch 1 oder einem der folgenden, dadurch gekennzeichnet, daß im Datenspeicher (14) neben der Artikelnummer wenigstens ein weiteres Codewort abgelegt und über die Auswerteschaltung (11) abrufbar ist.

6. Warenauszeichnungseinrichtung nach Anspruch 1 oder einem der folgenden, dadurch gekennzeichnet, daß die im Datenspeicher (14) abgelegten Codeworte über das Sendersignal (4) ansprechbar und veränderbar sind.

7. Warenauszeichnungseinrichtung nach Anspruch 1 oder einem der folgenden, dadurch gekennzeichnet, daß auf dem Schriftanzeigefeld (12) Worte oder Graphiken ausgegeben werden wie Preise, Artikelnamen, Hersteller, Warenzeichen und dergl..

8. Warenauszeichnungseinrichtung nach Anspruch 1 oder einem der folgenden, dadurch kennzeichnet, daß die Auswerteschaltung (11) eine Sprachausgabeeinrichtung steuert.

9. Warenauszeichnungseinrichtung nach Anspruch 1 oder einem der folgenden, dadurch gekennzeichnet, daß die Auswerteschaltung (11) einen Alarmgeber (16,17) steuert.

10. Warenauszeichnungseinrichtung nach Anspruch 1 oder einem der folgenden, dadurch gekennzeichnet, daß dem Ausgabegerät (5) eine gegen unberechtigtes Trennen von der Ware (19) und/oder Entfernen vom Verkaufsort zugeordnete Sicherungseinrichtung (18,20) zugeordnet ist, welche von der Auswerteschaltung (11) überwacht wird.

11. Warenauszeichnungseinrichtung nach Anspruch 1 oder einem der folgenden, dadurch gekennzeichnet, daß das Ausgabegerät (5) mit einer der Stromversorgung dienenden Solarzelle (15) versehen ist.

12. Warenauszeichnungseinrichtung nach Anspruch 11, dadurch gekennzeichnet, daß die Solarzelle (15) zumindest eine als Stromquelle dienende aufladbare Batterie (13) speist.

13. Warenauszeichnungseinrichtung nach Anspruch 1 oder einem der folgenden, dadurch gekennzeichnet, daß das Ausgabegerät (5) induktive, kapazitive oder galvanische Koppelmittel aufweist, über welche Daten (4) und/oder Versorgungsstrom zum Empfänger und/oder zur Batterie (13) übertragen werden.

14. Warenauszeichnungseinrichtung nach Anspruch 1 oder einem der folgenden, dadurch gekennzeichnet, daß das Ausgabegerät (5) eine Empfangsantenne (10) für hochfrequente Sendersignale (4) aufweist.

15. Warenauszeichnungseinrichtung nach Anspruch 1 oder einem der folgenden, dadurch gekennzeichnet, daß im Ausgabegerät (5) ein Rückmeldesender (9) für die zuvor vom Empfänger aufgenommenen Daten (4) vorgesehen ist und daß dem zentralen Sender (1) ein Rückmeldeempfänger (2) zugeordnet ist, der die vom Rückmeldesender (9) ausgegebenen Rückmeldesignale aufnimmt und an eine Vergleichsstufe (3) abgibt, in welcher die die vom zentralen Sender (1) ausgegebenen Soll-Daten (4) mit den Rückmeldedaten verglichen werden und bei Abweichungen eine Fehlermeldung am Sender (1) und/oder über die Alarmeinrichtung (16, 17) ausgegeben oder die Soll-Daten erneut gesendet und anschließend wieder verglichen werden.

16. Warenauszeichnungseinrichtung nach Anspruch 1 oder einem der folgenden, dadurch gekennzeichnet, daß der Empfänger auf unterschiedliche Empfangsfrequenzen abstimmbar ist.

17. Warenauszeichnungseinrichtung nach Anspruch 1 oder einem der folgenden, dadurch gekennzeichnet, daß am Ausgabegerät (5) eine separate Antenne (21) für den Rückmeldesender (9) vorgesehen ist.

18. Warenauszeichnungseinrichtung nach Anspruch 1 oder einem der folgenden, dadurch gekennzeichnet, daß das Ausgabegerät (5) mit einer Taste (22) oder Tastatur versehen ist, die mit der Auswerteschaltung (11) korrespondiert und die direkte Eingabe von aktuellen Daten ermöglicht.

19. Warenauszeichnungseinrichtung noch einem der vorangehenden Ansprüche, dadurch gekennzeichnet, daß die Ausgabeeinrichtung (5) über eine Infrarot- oder Ultraschallverbindung die Daten (4) übertragen bekommt.

20. Warenauszeichnungseinrichtung nach einem der vorangehenden Ansprüche, dadurch gekennzeichnet, daß die Ausgabeeinrichtung (5) mindestens einer Verkaufswand oder mindestens einem Verkaufsregal zugeordnet ist.

21. Warenauszeichnungseinrichtung nach einem der Ansprüche 1 bis 19, dadurch gekennzeichnet, daß die Ausgabeeinrichtung (5) einem Sektor einer Verkaufsfläche eines Warenhauses zugeordnet ist.

FIG.